# EUROPEAN PATENT SPECIFICATION

(11) **EP 0 813 285 B1**
(45) Date of publication and mention of the grant of the patent: **15.08.2007**
(21) Application number: 97109277.0
(22) Date of filing: 09.06.1997
(51) Int. Cl.: H02J 9/06, H05B 41/392, H05B 41/28

(54) **Emergency lighting device with optimized energy consumption**
Notbeleuchtungseinrichtung mit optimiertem Energieverbrauch
Eclairage de secours avec consommation d'énergie optimisée

(30) Priority: 12.06.1996 IT MI961198
(43) Date of publication of application: 17.12.1997
(73) Proprietor: GEWISS S.p.A., I-24069 Cenate Sotto (Bergamo) (IT)
(72) Inventor: Bosatelli, Domenico, 24069 Cenate Sotto (Bergamo) (IT)
(74) Representative: Forattini, Amelia

(56) References cited:
- EP-A- 0 450 728
- EP-A- 0 563 804
- DE-A- 19 529 750
- GB-A- 2 269 062
- US-A- 4 117 373
- US-A- 4 751 398
- US-A- 5 214 352
- US-A- 5 233 271
- US-A- 5 237 243
- US-A- 5 426 347

## Description

The present invention relates to an emergency lighting device with optimized energy consumption, particularly to a neon lamp used as an emergency lamp or as a combined emergency/ordinary-use lamp.

In public buildings such as theaters, movie theaters, stadiums, sports facilities and the like there is conventionally a strong need (controlled by statutory provisions) to have emergency lighting devices which can be activated in case of a mains power outage affecting ordinary lighting devices.

This requirement arises from the need to ensure constant lighting of structures where a large number of people gathers in order to ensure a high safety degree in such structures, even and especially in emergency conditions.

The lamps currently used as emergency lamps are neon lamps constituted by a conventional gas-filled tube equipped with a dual power supply circuit. These lamps are in fact powered both by the ordinary electric grid and by batteries which are appropriately accommodated in the body of the lamp.

The batteries are kept charged by the mains power supply and are therefore used to power the lamp only when mains power is interrupted.

There are substantially two kinds of emergency lamp: a first kind is constituted by "auxiliary" lamps, which are normally off and switch on only in case of an outage affecting the power supply of the main lighting lamps; the second kind is instead constituted by lamps which are always on and therefore act both as lamps for the normal lighting of spaces and as actual emergency lamps.

The endurance of these emergency lamps is limited, in terms of time, by the endurance of the rechargeable battery included therein.

The emergency lamps used so far have some drawbacks.

A first drawback is the fact that they have a high consumption (current absorption) caused by operation at non-optimum operating frequencies. This entails the need to use bulky batteries to achieve a lighting time which is sufficient to meet applicable statutory provisions.

Another drawback is caused by the need to perform manual adjustments to adjust the lamps.

Moreover, conventional emergency lamps, in order to prevent the rechargeable battery contained therein from draining during storage before use, have a disconnectable jumper which is suitable to physically connect the rechargeable battery to the lamp power supply circuit. During lamp storage, this jumper must be disconnected in order to keep the battery charged: when the lamp is installed, the operator must therefore connect said jumper before installing the lamp. This of course entails an additional task for the installation technician and a higher labor cost.

US-A-5214352 discloses an emergency lighting system whereby, in normal operation, the lights are driven with 60 Hz and, during emergency, the lights are driven at a higher of lower frequency to extend the endurance of the battery.

A principal aim of the present invention is to provide an emergency lighting device which has optimized consumption in any condition, so as to increase the available lighting endurance.

Within the scope of this aim, an object of the present invention is to provide an emergency lighting device which allows to provide real-time control of the current absorptions of the device.

Another object of the present invention is to provide an emergency lighting device which allows to reduce the power of the accumulators used for an equal lighting endurance and intensity.

Another object of the present invention is to provide an emergency lighting device which allows to eliminate the physical presence of the jumper for connecting the rechargeable battery being used to the power supply circuit of the device.

Another object of the present invention is to provide an emergency lighting device which is expandable in order to implement functions related to so-called "smart lights".

Another object of the present invention is to provide an emergency lighting device which is highly reliable and relatively easy to manufacture and at competitive costs.

This aim, these objects and others which will become apparent hereinafter are achieved by the invention as defined by the features of claim 1. Preferred embodiments of the invention are defined in the dependent claims.

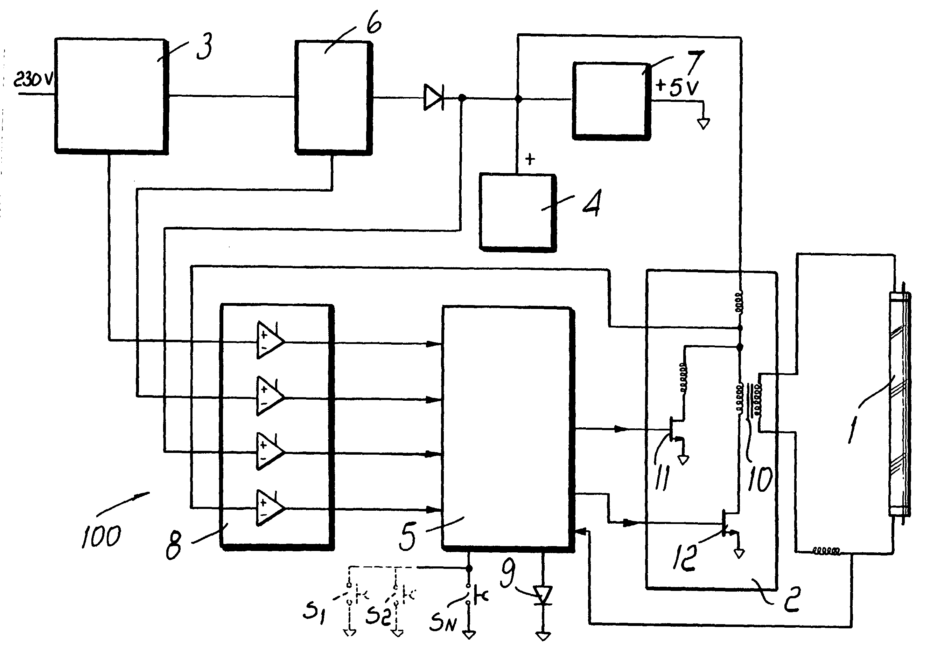

Further characteristics and advantages of the present invention will become apparent from the following detailed description of a preferred but not exclusive embodiment of the device according to the invention, illustrated only by way of non-limitative example in the accompanying drawing, wherein the only figure is a partial block diagram of the circuit layout of the emergency lighting device according to the invention.

With reference to the above figure, the emergency lighting device, generally designated by the reference numeral 100, comprises a lamp, advantageously constituted for example by a tube 1 filled with neon or another similar gas which is suitable to constitute the light source; inverter means 2, suitable to raise the supply voltage in order to drive the tube 1 so that it switches on; power supply means 3 which are suitable to supply power to the lamp 1 by means of the mains voltage; and auxiliary power supply means 4.

The inverter means 2 comprise a transformer 10 and two drivers 11 and 12 which are constituted for example by two MOSFET transistors.

Control and driving means 5, which advantageously comprise a microcontroller, are meant to control the state of the tube 1, of the power supply means 3, and of the auxiliary power supply means 4, which conveniently include a rechargeable battery.

Current control means 6 and voltage control means 7 are arranged respectively in series to the power supply means 3 and between the rechargeable battery 4 and the ground.

Comparator means 8 are connected so as to receive in input signals from the inverter means 2, from the power supply means 3, from a node of the circuit upstream of the rechargeable battery 4, and from the current control means 6 in order to compare the received signals with preset threshold values of said signals.

The signal received as feedback from the inverter means 2 allows the microcontroller 5 to compare the driving frequency of the inverter means 2 with a preset optimum operating frequency.

The signal from the power supply means 3 is compared with a preset threshold in order to check for the presence or absence of the mains voltage.

The signal from the current control means 6 is compared with a preset threshold in order to check the connection/disconnection of the rechargeable battery 4 in the power supply circuit of the lamp 1.

Finally, the signal from the circuit node interposed between the current control means 6 and the rechargeable battery 4 is compared with a preset threshold in order to check the charging condition of the rechargeable battery 4.

The signals in output from the comparator means 8 are sent to the microcontroller 5.

In turn, the microcontroller 5 receives in input a signal which arrives directly from the lamp 1 in order to determine the presence/absence of the lamp 1, i.e., to check that the lamp 1 is indeed inserted in the corresponding lamp-holder and therefore connected within the power supply circuit.

This signal is present only in the case of emergency lamps of the "always on"-type described above.

The microcontroller 5 also drives a plurality of LEDs 9 (only one of which is shown in the figure), which visually indicate the status of the lamp 1.

A plurality of switches S₁, S₂, ..., S_{N} is provided for the centralized control of the local disabling of the lamp 1 driven by the microcontroller 5. The number of switches S can vary between 1 and n in order to control the disabling of the lamp 1 from a plurality of different points inside the building in which the emergency lamp 1 is installed.

With reference to the above figures, operation of the device according to the invention is as follows.

First of all, it is necessary to make a distinction between emergency lamps which are switched on only if there is no mains voltage and so-called "always-on" emergency lamps, which accordingly have a dual function as normal lighting devices and as emergency lighting devices.

In the case of normal operating conditions, i.e., if the mains power supply is not interrupted, the lamp 1 is normally supplied by the power supply means 3 connected to the electric grid but remains off. In this situation the rechargeable battery 4 gets charged. In the case of an always-on emergency lamp, the lamp is of course on in this condition.

The microcontroller 5 receives in input, from the comparator means 8, the mains available signal, the disconnected battery signal, and the fedback signal from the inverter means 2 if the driving frequency of the inverter means 2 is the optimum one for the maximum efficiency of the inverter means 2 and therefore for maximum lighting efficiency of the lamp and minimum energy consumption.

Comparison between the signals in input to the comparator means 8 and preset threshold values is performed so as to output information signals to the microcontroller 5, which accordingly drives the inverter means 2 to switch on the lamp 1.

If the power supply is interrupted, the lamp 1 is powered by the rechargeable battery 4, which is capable of ensuring the lighting of the lamp 1 for a certain period of time.

Lack of mains voltage is detected by the comparator means 8, which send an information signal to the microcontroller 5.

The microcontroller 5 drives the inverter means 2 by varying the driving frequency of the drivers 11 and 12 so that the used frequency value, appropriately fedback by the inverter means 2 to the comparator means 8, reaches the optimum value preset during the manufacture of the lighting device.

Therefore, if the driving frequency used by the microcontroller 5 is such that the feedback signal from the inverter means 2 to the comparator means 8 does not match the preset threshold, the microcontroller 2 performs a so-called frequency "scan" until the feedback signal compared in the comparator means 8 yields a positive result, which indicates a matching between the operating frequency used by the microcontroller 5 and the preset threshold.

This threshold is chosen so as to optimize the efficiency of the inverter means 2 (and therefore of the lamp 1), taking into account all the variations of the actual electronic components used.

In this manner, the efficiency of the lamp 1 and the endurance of the battery 4 are improved considerably. The choice of the operating frequency, which is performed in real time, in fact allows to ensure control of the current absorptions of the lamp 1 both for starting it and for steady-state operation, so as to extend the endurance of the battery and therefore achieve longer emergency operation, for an equal battery size, with respect to conventional emergency lamps.

In this manner, the real-time search for the optimum operating frequency for the efficiency of the inverter means 2 takes into account the aging of the electronic components and their tolerances in order to optimize energy consumption in every circumstance.

The microcontroller 5 also controls the charging condition of the battery 4 and the "battery disconnected" condition by means of the input signals from the comparator means 8.

The switches S allow to disable the lamp 1 if one wishes to intentionally interrupt, for any reason, the mains power supply and does not wish the emergency lamp 1 to switch on inappropriately.

The LEDs 9 are driven on and off by the microcontroller 5 in order to indicate the status of the emergency lamp 1.

In case of an "always-on" lamp, there is an additional connection between the lamp 1 and the microcontroller 5. In particular, the microcontroller 5 is capable of detecting whether the lamp 1 is inserted or not in the lamp holder and/or is faulty with respect to normal operation.

In case of incorrect operation or disconnection of the lamp 1, the microcontroller 5 modifies the driving of the inverter means 2 so that the power dissipated ineffectively by the drivers 11 and 12 is reduced to a minimum. In this manner, in addition to reducing energy consumption, the advantage of protecting the drivers 11 and 12 against possible breakdowns caused by overloads is achieved.

When operating conditions are restored (the lamp 1 is connected), the microcontroller 5 reverts to normal operation.

The microcontroller 5 allows to avoid physically disconnecting the battery 4 from the circuit of the lighting device according to the invention, in order to prevent the battery from draining during storage of the device; the microcontroller 5, if not powered, in fact does not drive the inverter means 2 to switch on the lamp and therefore the consumption of the battery 4 is considerably reduced and therefore does not require disconnection of the battery from the lighting device.

In practice, it has been observed that the emergency lighting device according to the invention fully achieves the intended aim, since the microcontroller allows to control the status and operation of the lamp, minimizing energy consumption in real time (therefore as the conditions of the electronic devices change) by choosing the optimum frequency for driving the inverter means.

This characteristic allows to extend the endurance of the emergency lighting, for an equal battery type used, with respect to a conventional lamp, or to use a less powerful battery.

The microcontroller furthermore provides for a plurality of indications as to the status of the lamp, which can be easily "read" by means of LEDs.

The device thus conceived is susceptible of numerous modifications and variations, all of which are within the scope of the inventive concept as defined in the claims.

Thus, for example, the control functions performed by the microcontroller can be extended without altering the circuit configuration of the device according to the invention, so as to adapt to possible expansions of the lighting device.

Finally, all the details may be replaced with other technically equivalent elements, within the scope of the claims.

In practice, the materials employed, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An emergency lighting device with optimized consumption, comprising a light source (1), inverter means (2) for switching on and for steady-state operation of said light source (1), power supply means (3) for mains power supply and auxiliary power supply means (4), **characterized in that** it comprises control and driving means (5) which determine ; in real time and continuously, the optimum driving frequency of said inverter means (2) in order to switch on said light source and operate it steady-state with the minimum possible current absorption from said auxiliary power supply means (4), whereby comparator means (8) are connected between said power supply means (3), said auxiliary power supply means (4), and said control and driving means (5), said comparator means (8), receive in input the value of the driving frequency of the inverter means (2), which is fedback from said inverter means (2), so as to compare in real time and continuously said value with a preset threshold value, the signal arising from said comparison being sent in input to said control and driving means to determine, on the basis of said comparison, the optimum driving frequency for said inverter means (2).

2. A device according to claim 1, **characterized in that** said power supply means (3) and said auxiliary power supply means (4) are connected to said comparator means (8) in order to send status reporting signals to said comparator means (8) for comparison with preset threshold values, said comparator means (8) in turn sending signals which indicate the result of the comparisons to said control and driving means (5).

3. A device according to claim 2, **characterized in that** said control and driving means (5) receive in input a signal indicating the presence of the mains power supply voltage, a signal indicating the disconnection of the auxiliary power supply means(4), a signal indicating the charging status of the auxiliary power supply means(4), and a signal indicating a matching between the driving frequency value of said inverter means(2) and the preset threshold value for said frequency.

4. A device according to claim 1, **characterized in that** said control and driving means (5) drive at least one LED (9) which is connected thereto and indicates the status of the lighting device (1).

5. A device according to claim 1, **characterized in that** it comprises at least one switch (S₁₋ₙ) for switching off said light source (1) through said control and driving means (5).

6. A device according to claim 1, **characterized in that** it comprises current control means (6) and voltage control means (7) for charging said auxiliary power supply means (4).

7. A device according to claim 1, **characterized in that** said light source (1) is connected to said control and driving means (5) to send a signal which indicates the presence of said light source to said control and driving means.

8. A device according to claim 1, **characterized in that** said control and driving means (5) comprise a microcontroller.

9. A device according to claim 1, **characterized in that** said light source (1) comprises a neon tube.

10. A device according to claim 1, **characterized in that** said auxiliary power supply means (4) comprise at least one rechargeable battery.

11. A device according to claim 1, **characterized in that** said inverter means (2) comprise a pair of MOSFETs (11, 12) which are driven by said control and driving means (5).

## Patentansprüche

1. Notbeleuchtungsvorrichtung mit optimiertem Verbrauch, aufweisend eine Lichtquelle (1), einen Wechselrichtermittel (2) zum Anschalten und für den Dauerzustand der Lichtquelle (1), einem Energieversorgungsmittel (3) zur netzbetriebenen Energieversorgung und einem Hilfsenergieversorgungsmittel (4), **dadurch gekennzeichnet, dass** die Vorrichtung ein Steuerungs- und Antriebsmittel (5) aufweist, welches in Echtzeit und ununterbrochen die optimale Antriebsfrequenz der Wechselrichtermittel (2) festlegt, um die Lichtquelle anzuschalten und ihren Dauerzustand zu betätigen mit der kleinstmöglichen Stromaufnahme von dem Hilfsenergieversorgungsmittel (4), wobei ein Vergleichsmittel (8) mit dem Energieversorgungsmittel (3), dem Hilfsenergieversorgungsmittel (4) und dem Steuerungs- und Antriebsmittel (5) verbunden ist, wobei das Vergleichsmittel (8) im Eingang den Wert der Antriebsfrequenz des Wechselrichtermittels (2) erhält, welcher von dem Wechselrichtermittel (2) rückgeführt wird, um in Echtzeit und ununterbrochen den Wert mit einem vorgegebenen Grenzwert zu vergleichen, wobei das Signal, welches durch den Vergleich entsteht, an den Eingang des Steuerungs- und Antriebsmittels gesendet wird, um auf der Basis des Vergleichs die optimale Antriebsfrequenz für das Wechselrichtermittel (2) festzulegen.

2. Vorrichtung nach Anspruch 1, **dadurch gekennzeichnet, dass** das Energieversorgungsmittel (3) und das Hilfsenergieversorgungsmittel (4) mit dem Vergleichsmittel (8) verbunden sind, um den Zustand berichtende Signale zum Vergleich mit vorgegebenen Grenzwerten an das Vergleichsmittel (8) zu senden, wobei das Vergleichsmittel (8) Signale, welche das Ergebnis des Vergleichs anzeigen, an das Steuerungs- und Antriebsmittel (5) sendet.

3. Vorrichtung nach Anspruch 2, **dadurch gekennzeichnet, dass** das Steuerungs- und Antriebsmittel (5) im Eingang ein Signal, welches die Gegenwart der netzbetriebenen Energieversorgungsspannung anzeigt, ein Signal, das das Abschalten des Hilfsenergieversorgungsmittels (4) anzeigt, ein Signal, das den Ladungsstatus des Hilfsenergieversorgungsmittels (4) anzeigt und ein Signal, welches den Abgleich zwischen dem Antriebsfrequenzwert des Wechselrichtermittels (2) und des vorgegebenen Grenzwertes für die Frequenz anzeigt.

4. Vorrichtung nach Anspruch 1, **dadurch gekennzeichnet, dass** das Steuerungs- und Antriebsmittel (5) wenigstens eine LED (9) antreibt, welche damit verbunden ist und den Zustand der Beleuchtungseinrichtung (1) anzeigt.

5. Vorrichtung nach Anspruch 1, **dadurch gekennzeichnet, dass** die Vorrichtung wenigstens einen Schalter (S₁, ..., S_{N}) zum Ausschalten der Lichtquelle (1) durch das Steuerungs- und Antriebsmittel (5) aufweist.

6. Vorrichtung nach Anspruch 1, **dadurch gekennzeichnet, dass** die Vorrichtung ein Stromsteuerungsmittel (6) und ein Spannungssteuerungsmittel (7) zur Aufladung des Hilfsenergieversorgungsmittels (4) aufweist.

7. Vorrichtung nach Anspruch 1, **dadurch gekennzeichnet, dass** die Lichtquelle (1) mit dem Steuerungs- und Antriebsmittel (5) verbunden ist, um ein Signal an das Steuerungs- und Antriebsmittel zu senden, welches die Gegenwart der Lichtquelle anzeigt.

8. Vorrichtung nach Anspruch 1, **dadurch gekennzeichnet, dass** das Steuerungs- und Antriebsmittel (5) einen Mikrocontroller aufweist.

9. Vorrichtung nach Anspruch 1, **dadurch gekennzeichnet, dass** die Lichtquelle (1) eine Neonröhre aufweist.

10. Vorrichtung nach Anspruch 1, **dadurch gekennzeichnet, dass** das Hilfsenergieversorgungsmittel (4) wenigstens eine wiederaufladbare Batterie aufweist.

11. Vorrichtung nach Anspruch 1, **dadurch gekennzeichnet, dass** das Wechselrichtermittel (2) ein Paar von MOSFETs (11, 12) aufweist, welche durch das Steuerungs- und Antriebsmittel (5) angetrieben werden.

## Revendications

1. Dispositif d'éclairage de secours avec consommation optimisée, comprenant une source de lumière (1), des moyens inverseurs (2) pour commuter sur ladite source de lumière (1) et pour un fonctionnement stable de celle-ci, des moyens d'alimentation (3) pour des moyens d'alimentation secteur et des moyens d'alimentation auxiliaires (4), **caractérisé en ce qu'**il comprend des moyens de commande et d'excitation (5) qui déterminent, en temps réel et en continu, la fréquence d'excitation optimale desdits moyens inverseurs (2), afin de commuter sur ladite source de lumière et d'assurer son fonctionnement stable avec la plus faible absorption de courant possible à partir desdits moyens d'alimentation auxiliaires (4), moyennant quoi des moyens comparateurs (8) sont connectés entre lesdits moyens d'alimentation (3), lesdits moyens d'alimentation auxiliaires (4) et lesdits moyens de commande et d'excitation (5), lesdits moyens comparateurs (8) recevant en entrée la valeur de la fréquence d'excitation des moyens inverseurs (2), qui est renvoyée par lesdits moyens inverseurs (2), de sorte à comparer en temps réel et en continu ladite valeur à une valeur de seuil prédéfinie, le signal venant de ladite comparaison étant envoyé en entrée auxdits moyens de commande et d'excitation pour déterminer, sur la base de ladite comparaison, la fréquence d'excitation optimale pour lesdits moyens inverseurs (2).

2. Dispositif selon la revendication 1, **caractérisé en ce que** lesdits moyens d'alimentation (3) et lesdits moyens d'alimentation auxiliaires (4) sont connectés auxdits moyens comparateurs (8) afin d'envoyer des signaux de rapport d'état auxdits moyens comparateurs (8) pour comparaison avec des valeurs de seuil prédéfinies, lesdits moyens comparateurs (8) envoyant à leur tour des signaux qui indiquent le résultat des comparaisons auxdits moyens de commande et d'excitation (5).

3. Dispositif selon la revendication 2, **caractérisé en ce que** lesdits moyens de commande et d'excitation (5) reçoivent en entrée un signal indiquant la présence de la tension d'alimentation de secteur, un signal indiquant la déconnexion des moyens d'alimentation auxiliaires (4), un signal indiquant l'état de chargement des moyens d'alimentation auxiliaires (4), et un signal indiquant une correspondance entre la valeur de fréquence d'excitation desdits moyens inverseurs (2) et la valeur de seuil prédéfinie pour ladite fréquence.

4. Dispositif selon la revendication 1, **caractérisé en ce que** lesdits moyens de commande et d'excitation (5) excitent au moins une diode électroluminescente (LED) (9) qui est connectée à ceux-ci et indique l'état du dispositif d'éclairage (1).

5. Dispositif selon la revendication 1, **caractérisé en ce qu'**il comprend au moins un commutateur (Sl₋ₙ) pour couper ladite source de lumière (1) par le biais desdits moyens de commande et d'excitation (5).

6. Dispositif selon la revendication 1, **caractérisé en ce qu'**il comprend des moyens de commande de courant (6) et des moyens de commande de tension (7) pour charger lesdits moyens d'alimentation auxiliaires (4).

7. Dispositif selon la revendication 1, **caractérisé en ce que** ladite source de lumière (1) est connectée auxdits moyens de commande et d'excitation (5) pour envoyer un signal qui indique la présence de ladite source de lumière auxdits moyens de commande et d'excitation.

8. Dispositif selon la revendication 1, **caractérisé en ce que** lesdits moyens de commande et d'excitation (5) comprennent un microcontrôleur.

9. Dispositif selon la revendication 1, **caractérisé en ce que** ladite source de lumière (1) comprend un tube néon.

10. Dispositif selon la revendication 1, **caractérisé en ce que** lesdits moyens d'alimentation auxiliaires (4) comprennent au moins une batterie rechargeable.

11. Dispositif selon la revendication 1, **caractérisé en ce que** lesdits moyens inverseurs (2) comprennent une paire de transistors à effet de champ de semi-conducteur d'oxyde de métal (MOSFET) (11, 12) qui sont excités par lesdits moyens de commande et d'excitation (5).
